# EUROPÄISCHE PATENTSCHRIFT

(11) **EP 1 858 826 B1**
(45) Veröffentlichungstag und Bekanntmachung des Hinweises auf die Patenterteilung: **23.05.2012**
(21) Anmeldenummer: 06704745.6
(22) Anmeldetag: 10.03.2006
(51) Int. Cl.: C04B 41/61

(54) **REINIGUNGS- UND IMPRÄGNIERUNGSMITTEL FÜR SÄUREBESTÄNDIGE NATUR- UND KUNSTSTEINE, SOWIE EIN VERFAHREN ZUR REINIGUNG UND GLEICHZEITIGEN IMPRÄGNIERUNG VON SÄUREBESTÄNDIGEN NATUR- UND KUNSTSTEINEN**
CLEANING AND IMPREGNATING PRODUCT DESIGNED FOR ACID-RESISTANT NATURAL AND ARTIFICIAL STONES, AND METHOD FOR CLEANING AND SIMULTANEOUSLY IMPREGNATING NATURAL AND ARTIFICIAL STONES
PRODUIT DE NETTOYAGE ET D'IMPREGNATION DESTINE A DES PIERRES NATURELLES ET PIERRES ARTIFICIELLES RESISTANTES AUX ACIDES, ET PROCEDE DE NETTOYAGE ET SIMULTANEMENT D'IMPREGNATION DE PIERRES NATURELLES ET PIERRES ARTIFICIELLES

(30) Priorität: 10.03.2005 AT 1452005 U
(43) Veröffentlichungstag der Anmeldung: 28.11.2007
(73) Patentinhaber: Weiss, Winfried, 4312 Ried In Der Riedmark (AT)
(72) Erfinder: Weiss, Winfried, 4312 Ried In Der Riedmark (AT)
(74) Vertreter: Babeluk, Michael
(86) Internationale Anmeldenummer: PCT/AT2006/000103
(87) Internationale Veröffentlichungsnummer: WO 2006/094328

(56) Entgegenhaltungen:
- CH-A- 496 633
- DE-A1- 1 571 593
- DE-A1- 4 418 309
- DE-B- 1 075 768
- DE-B- 1 222 839
- DE-C1- 4 138 745
- US-A- 4 837 261

## Beschreibung

Die vorliegende Erfindung betrifft ein Reinigungs- und Imprägnierungsmittel für säurebeständige Natur- und Kunststeine, so wie ein Verfahren zur Reinigung und gleichzeitigen Imprägnierung von säurebeständigen Natur- und Kunststeinen und eine chemische Zubereitung zum Reinigen und Imprägnieren von säurebeständigen Natur- und Kunststeinen in einem Arbeitsgang. Insbesondere richtet sich die Erfindung auf die Schaffung eines Reinigungs- und Pflegemittels, das nicht nur konservierende Eigenschaften aufweist, sondern zur gleichzeitigen Entfernung von Zementschleiern, Rostflecken und ähnlichen Verschmutzungen geeignet ist, sowie gegebenenfalls als Rostumwandler oder zum Aufrauen von polierten Granit- oder Kalksteinoberflächen, sowie glasierten Keramikoberflächen geeignet ist, um die Nassrutschsicherheit zu erhöhen.

Nach dem Einbau, der Verlegung oder Erstellung von Bauwerken, Teilen von Bauwerken oder Denkmälern aus mineralischen Baustoffen, erfolgte bisher bei entsprechender Verschmutzung eine Reinigung mit säurehaltigen oder sauren Reinigern, hinlänglich bekannt als Zementschleier- oder Ausblühungsentferner, als Rostentferner oder dergleichen. Solche Verschmutzungen rühren beispielsweise her von der Verarbeitung von Verlegemörtel, Klebemörtel oder Fugenmasse. Verunreinigungen können aber auch durch Ausblühungen entstehen, wenn Calziumcarbonate durch Feuchtigkeit aus dem Untergrund gelöst und an die Oberfläche der zu reinigenden Flächen transportiert wurden. Auch durch die mechanische Bearbeitung der mineralischen Baustoffe können anhaftende Verunreinigungen, wie etwa Schleif- und Sägeschlamm, Rost oder andere säurelösliche Verunreinigungen entstehen.

Die verwendeten Säuren oder Säurekombinationen sind beispielsweise Salzsäure, Phosphorsäure, Amidosulfonsäure, Ameisensäure, Zitronensäure oder Lösungen von sauren Salzen. Reinigungsmittel, die auf der Basis solcher Säuren wirken, sind beispielsweise aus der DE 36 06 511 A, der DE 34 32 581 A, der DE 157 15 93 A oder der JP 09-031493 A bekannt.

Zwangsläufig greift dabei diese Lösung auch die aus Zement bestehende Verfugung der Steine an, insbesondere dann, wenn nicht sorgfältig und sachgemäß vorgegangen wird. Da jedoch im allgemeinen grundsätzlich flächig gearbeitet werden muss, leiden die Fugen immer, da der Zement als Bindemittel des Fugenmörtels oberflächlich gelöst und beim Nachwaschen des Bodens abgeschwemmt wird.

Nach einer solchen Behandlung mit stark sauren Reinigungsmitteln erfolgt üblicherweise eine Nachbehandlung mit Steinpflegemitteln, welche eine imprägnierende oder beschichtende Eigenschaft zeigen. Dies erfolgt durch Auf- oder Einbringen von Wasser und/oder Lösungsmitteln, in denen gelöste, emulgierte oder dispergierte Schutzstoffe mit hydrophober oder lipophober Wirkung enthalten sind. Solche Schutzstoffe sind beispielsweise modifizierte Wachse, Silane, Siloxane, Harze oder Polymere. Sie verhindern weitgehend das Eindringen von Feuchtigkeit und/oder Fetten bzw. Ölen, sowie anderer Verschmutzungen, indem sie die freien Oberflächenporen geringfügig bis vollständig verschließen und schränken umgekehrt auch die Dampfdiffusion entsprechend ein. Hierfür geeignete chemische Zubereitungen können beispielsweise der DE 198 43 498 A1 oder der DE 44 18 309 A1 entnommen werden.

Bekannte Mittel der eingangs erwähnten Art haben entweder eine starke reinigende Wirkung oder eine ausgeprägte schützende Funktion. Entsprechend musste bisher zum Erreichen der Reinigung und der Schutzwirkung mit zwei Produkten gearbeitet werden.

Es gibt zwar bereits Steinpflegemittel auf der Basis von Chlorkohlenwasserstoffen mit Beimengungen von Naturharzen oder Wachsen, insbesondere in der Form von Wachsen des Polyvinyläthers, des Octadecylalkohols und ähnliche. Solche Steinpflegemittel vermögen zum Teil auch Verschmutzungen und Zementschleier zu entfernen. Sie haben jedoch keinen oder nur leicht sauren Charakter und sind für die Reinigung der vorgenannten Verschmutzungen bei weitem nicht ausreichend. Weiters weisen viele den Nachteil auf, dass sie gesundheitsschädlich oder bei Verwendung anderer Lösungsmittel feuergefährlich sind. Darüber hinaus erweicht der zurückbleibende Schutzfilm bei Erwärmung, so dass der Überzug mit der Zeit seinen Glanz verliert. Außerdem ist er nicht schmutzabweisend. Schließlich enthalten solche Produkte auch Paraffinöl, das die Gefahr des Rutschens auf glatten Platten mit sich bringt.

Man kennt auch bereits lackartige Produkte, mit denen der Glanz auf matt gewordenen Steinen wieder hergestellt werden kann. Bei diesen Produkten handelt es sich jedoch im weitesten Sinn um farblose Lacke, die mit dem Pinsel aufgestrichen werden müssen, so dass jeder Reinigungseffekt entfällt. Hinsichtlich der Feuergefährlichkeit bzw. der Gesundheitsschädlichkeit gilt für diese lackartigen Produkte das gleiche wie für die bekannten Steinpflegemittel.

Ferner gehören zum Stand der Technik Harzlösungen oder Harzdispersionen, gegebenenfalls gemischt mit Wachsemulsionen und Netzmitteln, die zur Bodenpflege verwendet werden. Mit allen diesen Produkten können jedoch Zementschleier und starke Verschmutzungen durch Fetteinwirkung, Teereinwirkung oder Öleinwirkung nicht von den Steinen entfernt werden.

In der DE 107 5 768 B sowie der US 4,837,261 A sind Reinigungs- und Imprägniermittel beschrieben, die neben einer reinigende Komponente, beispielsweise einer Säure, zusätzlich einen Schutzstoff mit imprägnierender Wirkung enthalten. Hierbei werden als imprägnierende Stoffe Alkalimethylsilikonate bzw. Polysiloxane eingesetzt.

Die vorliegende Erfindung stellt sich daher die Aufgabe, eine chemische Zubereitung zu schaffen, welche sowohl eine ausreichend gute reinigende als auch eine imprägnierende Wirkung hat, um die bisher erforderlichen zwei Bearbeitungsschritte durch einen einzigen Arbeitsgang zu ersetzen. Dies bedeutet nicht nur eine erhebliche Reduzierung der Bearbeitungszeit, es entfällt auch die zwischen der Reinigung und der Imprägnierung bisher aufzuwendende Standzeit, welche die Fertigstellung eines Bauwerkes erheblich verzögerte.

Diese Aufgabe wird durch ein Reinigungs- und Imprägnierungsmittel für säurebeständige Natur- und Kunststeine gelöst, das aus einer Zubereitung besteht, die eine Säure enthält, wobei der pH-Wert der Zubereitung kleiner als 5, vorzugsweise kleiner als 4 ist, wobei die Zubereitung weiters einen säurestabilen oder säurestabilisierten Schutzstoff aufweist, der ein Halogenpolymer, vorzugsweise ein Fluorpolymer enthält, und das Halogenpolymer in einer Konzentration von 1 bis 10 Gew.%, vorzugsweise von etwa 3 Gew.% vorliegt.

Damit wird ein säurestabiler oder ein säurestabilisierter Schutzstoff mit sauren Lösungen kombiniert, wobei diese sowohl in einem Produkt vorliegen können, oder auch in zwei Produkten, welche unmittelbar vor ihrer Anwendung gemischt werden, um dann in einem Arbeitsgang auf dem Substrat zur Anwendung zu kommen.

Gleichzeitig wird mit der erfindungsgemäßen chemischen Zubereitung erforderlichenfalls eine Rostumwandlung bei zur Rostbildung neigenden Natursteinen herbeigeführt. Für bestimmte Anwendungsfälle wird mit dieser chemischen Zubereitung eine Oberflächenaufrauung bei poliertem Granit, Kalkstein glasierter Keramik oder ähnlichem Substrat erzielt, um eine verbesserte Rutschfestigkeit bei feuchter Oberfläche zu erzielen.

Wesentlich für die Erfindung ist es auch, eine geeignete Balance zwischen dem Säureanteil und dem Anteil an dem Zusatzstoff zu gewährleisten. Die Zusatzstoffe werden teilweise säurestabilisiert angeboten, sind aber in dieser Form nicht als Behandlungsmittel geeignet. So muss einerseits eine Verdünnung herbeigeführt werden, um die Wirkung des Zusatzstoffs in geeigneter Form herzustellen, und andererseits muss der pH-Wert abgesenkt werden, um die Reinigungswirkung zu erreichen.

Im folgenden werden einige Beispiele für erfindungsgemäße Reiniger/Imprägnierer angeführt, welche je nach Zusammensetzung speziell als Zementschleierentferner, als Rostumwandler bzw. Rostentferner, als Fassadenreiniger, als Desinfektionsreiniger oder zur Aufrauung polierter Oberflächen eingesetzt werden. Diese Angaben umfassen jedoch ausdrücklich nicht alle unter dieses Schutzrecht fallende chemischen Zubereitungen.

### Beispiel 1:

- 10: Gewichtsanteile phosphorige Säure
- 3: Gewichtsanteile fluorierte Polymerdispersion (beispielsweise der Zusammensetzung Dupont Zonyl 329)
- 87: Gewichtsanteile Wasser

### Beispiel 2:

- 10: Gewichtsanteile Ameisensäure
- 3: Gewichtsanteile fluorierte Polymerdispersion (beispielsweise der Zusammensetzung Dupont Zonyl 329)
- 87: Gewichtsanteile Wasser

### Beispiel 3:

- 10: Gewichtsanteile Essigsäure
- 3: Gewichtsanteile einer Dispersion aus Alkylalkoxysilan mit Polymeren (beispielsweise der Zusammensetzung Wacker BS 29)
- 87: Gewichtsanteile Wasser

### Beispiel 4:

- 10: Gewichtsanteile Phosphorsäure
- 3: Gewichtsanteile einer Dispersion aus Alkylalkoxysilan mit Polymeren (beispielsweise der Zusammensetzung Wacker BS 29)
- 0,1: Gewichtsanteile Fluortensid (beispielsweise der Zusammensetzung Dupont Zonyl FSO)
- 86,9: Gewichtsanteile Wasser

### Beispiel 5:

- 10: Gewichtsanteile Phosphorsäure
- 3: Gewichtsanteile einer Dispersion aus Alkylalkoxysilan mit Polymeren (beispielsweise der Zusammensetzung Wacker BS 29)
- 5: Gewichtsanteile Polyvinylalkohol
- 82: Gewichtsanteile Wasser

### Beispiel 6:

- 10: Gewichtsanteile Phosphorsäure
- 3: Gewichtsanteile fluorierte Polymerdispersion (beispielsweise der Zusammensetzung Dupont Zonyl 329)
- 0,1: Gewichtsanteile Fluortensid (beispielsweise der Zusammensetzung Dupont Zonyl FSO)
- 86,9: Gewichtsanteile Wasser

### Beispiel 7:

- 10: Gewichtsanteile Phosphorsäure
- 3: Gewichtsanteile fluorierte Polymerdispersion (beispielsweise der Zusammensetzung Dupont Zonyl 329)
- 5: Gewichtsanteile Polyvinylalkohol
- 82: Gewichtsanteile Wasser

### Beispiel 8:

- 30: Gewichtsanteile Phosphorsäure
- 10: Gewichtsanteile Salzsäure
- 2: Gewichtsanteile fluorierte Polymerdispersion (beispielsweise der Zusammensetzung Dupont Zonyl 8740)
- 6: Gewichtsanteile Monodiphosphorsäureester (beispielsweise der Zusammensetzung BASF LUTENSIT A.EP)
- 1: Gewichtsanteil 2-Butin-1,4-diol (beispielsweise der Zusammensetzung BASF Korantin BH Rostinhibitor)
- 51: Gewichtsanteile Wasser

### Beispiel 9:

- 15: Gewichtsanteile Zitronensäure
- 2: Gewichtsanteile fluorierte Polymerdispersion (beispielsweise der Zusammensetzung Dupont Zonyl 8740)
- 6: Gewichtsanteile Monodiphosphorsäureester (beispielsweise der Zusammensetzung BASF LUTENSIT A.EP)
- 77: Gewichtsanteile Wasser

### Beispiel 10:

- 15: Gewichtsanteile Phosphorsäure
- 5: Gewichtsanteile Sulfonsäure
- 3: Gewichtsanteile Butyldiglycol (beispielsweise der Zusammensetzung Dupont Zonyl 8740)
- 10: Gewichtsanteile organofunktionelle Silane (beispielsweise der Zusammensetzung Degussa Protectosil SC)
- 67: Gewichtsanteile Wasser

### Beispiel 11:

- 30: Gewichtsanteile Phosphorsäure
- 6: Gewichtsanteile kathionisches, biozides Tensid, wie etwa Dimethyl-C12C14- alkylbenzylammoniumchlorid (beispielsweise der Zusammensetzung BASF Protectol KLC 50)
- 6: Gewichtsanteile schaumarmes nichtionisches Tensid, wie etwa Fettalkoholalkoxylat (beispielsweise der Zusammensetzung BASF Plurafac LF 403)
- 2: Gewichtsanteile fluoralkylfunktionelles, wasserlösliches Polysiloxan (beispielsweise der Zusammensetzung Degussa Dynasylan F 8800)
- 2: Gewichtsanteile Natriumhexametaphosphat
- 5: Gewichtsanteile Isopropanol
- 48: Gewichtsanteile Wasser

### Beispiel 12:

- 10: Gewichtsanteile Ammoniumhydrogendifluorid
- 0,1: Gewichtsanteile Fluortensid (beispielsweise der Zusammensetzung Dupont Zony FSO)
- 4: Gewichtsanteile fluoralkylfunktionelles, wasserlösliches Polysiloxan (beispielsweise der Zusammensetzung Degussa Dynasylan F 8800)
- 85,9: Gewichtsanteile Wasser

## Patentansprüche

1. Reinigungs- und Imprägnierungsmittel für säurebeständige Natur- und Kunststeine, bestehend aus einer Zubereitung, die eine Säure enthält, wobei der pH-Wert kleiner als 5, vorzugsweise kleiner als 4 ist, sowie weiters ein säurestabiler oder säurestabilisierter Schutzstoff zur Imprägnierung enthalten ist, **dadurch gekennzeichnet, dass** der Schutzstoff zur Imprägnierung ein Halogenpolymer, vorzugsweise ein Fluorpolymer enthält, wobei das Halogenpolymer in einer Konzentration von 1 bis 10 Gew.% vorliegt.

2. Reinigungs- und Imprägnierungsmittel nach Anspruch 1, **dadurch gekennzeichnet, dass** das Halogenpolymer in einer Konzentration von etwa 3 Gew.% vorliegt.

3. Reinigungs- und Imprägnierungsmittel nach Anspruch 1 oder 2, **dadurch gekennzeichnet, dass** die Säure in einer sauren Lösung vorliegt und eine organische oder eine anorganische Säure oder eine Lösung von sauren Salzen ist.

4. Reinigungs- und Imprägnierungsmittel nach einem der Ansprüche 1 bis 3, **dadurch gekennzeichnet, dass** der Schutzstoff zusätzlich ein Alkylalkoxysilan enthält, das vorzugsweise in einer Konzentration von 1 bis 10 Gew.%, besonders vorzugsweise von etwa 3 Gew.% vorliegt.

5. Reinigungs- und Imprägnierungsmittel nach einem der Ansprüche 1 bis 4, **dadurch gekennzeichnet, dass** der Schutzstoff zusätzlich ein Mono-, Poly- bzw. Oligosiloxan enthält, das vorzugsweise in einer Konzentration von 1 bis 10 Gew.%, besonders vorzugsweise von etwa 3 Gew.% vorliegt..

6. Reinigungs- und Imprägnierungsmittel nach einem der Ansprüche 1 bis 5, **dadurch gekennzeichnet, dass** der Schutzstoff zusätzlich einen Polyvinylalkohol und/oder einen Niedrigalkylalkohol, vorzugsweise Propanol oder Butylglykol, enthält.

7. Reinigungs- und Imprägnierungsmittel nach einem der Ansprüche 1 bis 6, **dadurch gekennzeichnet, dass** der Schutzstoff eine Kombination aus einem Halogenpolymer, einem Alkylalkoxysilan und/oder einem Polyvinylalkohol ist.

8. Reinigungs- und Imprägnierungsmittel nach einem der Ansprüche 1 bis 7, **dadurch gekennzeichnet, dass** die chemischen Zusammensetzung zusätzlich ein Rostschutzmittel und/oder einen Komplexbildner und/oder ein Tensid, insbesondere ein Fluortensid enthält.

9. Verfahren zur Reinigung und Imprägnierung von säurebeständigen Natur-und Kunststeinen, **dadurch gekennzeichnet, dass** eine chemische Zubereitung nach einem der Ansprüche 1 bis 8 mit einem säurestabilen oder säurestabilisierten Schutzstoff zur Imprägnierung in einem Arbeitsgang auf einer Steinfläche zur Anwendung kommt, wobei der Schutzstoff ein Halogenpolymer, vorzugsweise ein Fluorpolymer enthält, wobei das Halogenpolymer in einer Konzentration von 1 bis 10 Gew.%, vorzugsweise von etwa 3 Gew.% vorliegt, in einer sauren Lösung, deren pH-Wert kleiner als 5, insbesondere kleiner als 4 ist,.

10. Verfahren nach Anspruch 9, **dadurch gekennzeichnet, dass** die chemische Zubereitung in vorgefertigtem Zustand eingesetzt wird, wobei die chemische Zubereitung aus mindestens zwei Komponenten besteht, von denen eine den säurestabilen oder säurestabilisierten Schutzstoff und eine andere die saure Lösung enthält, welche unmittelbar vor ihrer Anwendung vermengt werden.

## Claims

1. A cleaning and impregnating product designed for acid-resistant natural and artificial stones, consisting of a composition containing an acid, with the pH value being lower than 5, preferably lower than 4, and said composition further containing an acid-stable or acid-stabilized protecting substance for impregnation, **characterised in that** the protecting substance for impregnation contains a halogen polymer, preferably a fluoropolymer, with the halogen polymer being present in a concentration of 1 to 10 percent by weight.

2. A cleaning and impregnating product according to claim 1, **characterised in that** the halogen polymer is present in a concentration of approximately 3 percent by weight.

3. A cleaning and impregnating product according to claim 1 or 2, **characterised in that** the acid is present in an acidic solution and is an organic or inorganic acid or a solution of acid salts.

4. A cleaning and impregnating product according to one of the claims 1 to 3, **characterised in that** the protecting substance additionally contains an alkyl alkoxysilane which is preferably present in a concentration of 1 to 10 percent by weight, more preferably approximately 3 percent by weight.

5. A cleaning and impregnating product according to one of the claims 1 to 4, **characterised in that** the protecting substance additionally contains a monosiloxane, polysiloxane or oligosiloxane which is preferably present in a concentration of 1 to 10 percent by weight, more preferably approximately 3 percent by weight.

6. A cleaning and impregnating product according to one of the claims 1 to 5, **characterised in that** the protecting substance additionally contains a polyvinyl alcohol and/or a low-alkyl alcohol, preferably propanol or butyl glycol.

7. A cleaning and impregnating product according to one of the claims 1 to 6, **characterised in that** the protecting substance is combination of a halogen polymer, an alkyl alkoxysilane and/or a polyvinyl alcohol.

8. A cleaning and impregnating product according to one of the claims 1 to 7, **characterised in that** the chemical composition additionally contains a rust preventing agent and/or complexing agent and/or a surfactant, especially a fluorosurfactant.

9. A method for cleaning and impregnating acid-resistant natural and artificial stones, **characterised in that** a chemical composition according to one of the claims 1 to 8 with an acid-stable or acid-stabilized protecting substance for impregnation in one single operation on a stone surface is applied, with the protecting substance containing a halogen polymer, preferably a fluoropolymer, with the halogen polymer being present in a concentration of 1 to 10 percent by weight, preferably approximately 3 percent by weight, in an acidic solution whose pH value is lower than 5, especially lower than 4.

10. A method according to claim 9, **characterised in that** the chemical composition is employed in a prepared state, with the chemical composition consisting of at least two components, of which one contains the acid-stable or acid-stabilized protecting substance and the other contains the acidic solution, which are mixed with each other directly prior to application.

## Revendications

1. Agent de nettoyage et d'imprégnation pour des pierres naturelles et artificielles résistant aux acides constitué d'une composition qui renferme un acide, la valeur du pH étant inférieure à 5 et de préférence inférieure à 4, et renfermant en outre un matériau de protection stable ou stabilisé vis-à-vis des acides pour l'imprégnation,
**caractérisé en ce que**
le matériau de protection pour l'imprégnation renferme un polymère halogéné, de préférence un polymère fluoré, ce polymère halogéné étant présent à une concentration de 1 à 10 % en poids.

2. Agent de nettoyage et d'imprégnation conforme à la revendication 1,
**caractérisé en ce que**
le polymère halogéné est présent à une concentration d'environ 3 % en poids.

3. Agent de nettoyage et d'imprégnation conforme à la revendication 1 ou 2,
**caractérisé en ce que**
l'acide est présent dans une solution acide et est constitué par un acide organique ou minéral ou une solution de sels acides.

4. Agent de nettoyage et d'imprégnation conforme à l'une des revendications 1 à 3,
**caractérisé en ce que**
le matériau de protection renferme en outre un alkyl alcoxy silane qui est de préférence présent à une concentration de 1 à 10 % en poids et de façon particulièrement préférentielle à une concentration d'environ 3 % en poids.

5. Agent de nettoyage et d'imprégnation conforme à l'une des revendications 1 à 4,
**caractérisé en ce que**
le matériau de protection renferme en outre un mono, poly ou oligo siloxane qui est de préférence présent à une concentration de 1 à 10 % en poids et de façon particulièrement préférentielle à une concentration d'environ 3 % en poids.

6. Agent de nettoyage et d'imprégnation conforme à l'une des revendications 1 à 5,
**caractérisé en ce que**
le matériau de protection renferme en outre un alcool polyvinylique et/ou un alcool alkylique inférieur, de préférence du propanol ou du butyl glycol.

7. Agent de nettoyage et d'imprégnation conforme à l'une des revendications 1 à 6,
**caractérisé en ce que**
le matériau de protection est une combinaison d'un polymère halogéné, d'un alkyl alcoxy silane et/ou d'un alcool polyvinylique.

8. Agent de nettoyage et d'imprégnation conforme à l'une des revendications 1 à 7,
**caractérisé en ce que**
la composition chimique renferme en outre un agent de protection antirouille et/ou un agent de complexation et/ou un agent tensio-actif, en particulier un agent tensio-actif fluoré.

9. Procédé de nettoyage et d'imprégnation de pierres naturelles et artificielles résistant aux acides,
**caractérisé en ce que**
l'on met en oeuvre dans une étape de travail, sur une surface en pierre, une préparation chimique conforme à l'une des revendications 1 à 8 avec un matériau de protection stable ou stabilisé vis-à-vis des acides pour l'imprégnation, ce matériau de protection renfermant un polymère halogéné, de préférence un polymère fluoré, et le polymère halogéné étant présent à une concentration de 1 à 10 % en poids, de préférence d'environ 3 % en poids dans une solution acide dont le pH est inférieur à 5 et en particulier inférieur à 4.

10. Procédé conforme à la revendication 9,
**caractérisé en ce que**
la préparation chimique est mise en oeuvre dans un état préalablement préparé, cette préparation chimique étant constituée d'au moins deux composants dont l'un renferme le matériau de protection stable ou stabilisé vis-à-vis des acides et dont un autre renferme la solution acide, ces composants étant mélangés immédiatement avant leur utilisation.
